# EUROPÄISCHE PATENTANMELDUNG

(11) **EP 0 903 291 A2**
(43) Veröffentlichungstag der Anmeldung: **24.03.1999**
(21) Anmeldenummer: 98117424.6
(22) Anmeldetag: 15.09.1998
(51) Int. Cl.: B65B 7/16

(54) **Vorrichtung und Verfahren zum Versiegeln von Verpackungsbehältern**

(30) Priorität: 18.09.1997 DE 19740988
(71) Anmelder: LIEDER MASCHINENBAU GmbH & Co. KG, D-29690 Schwarmstedt (DE)
(72) Erfinder: Grüne, Helmut, 29690 Schwarmstedt (DE)
(74) Vertreter: Heldt, Gert, Dr. Dipl.-Ing.

(57) **Zusammenfassung**

Mit einer Vorrichtung zum Versiegeln von Verpackungsbehältern, deren Öffnung mit einer Folie verschließbar ist, wird unter dem Einfluß von Hitze die Folie mit einem die Öffnung umgebenden Rand verbunden. Zur Verbindung der Folie mit dem Rand ist eine Siegelstation vorgesehen, die aus einem Oberwerkzeug und einem Unterwerkzeug besteht. Die beiden Werkzeuge sind aufeinander zu bewegbar, bis eine beheizte Siegelelektrode eines der beiden Werkzeuge den mit der Folie bedeckten Rand gegen das jeweils andere Werkzeug beaufschlagt. Die Siegelelektrode ist mit dem Oberwerkzeug verbunden, das in Richtung auf das Unterwerkzeug absenkbar ausgebildet ist. Das Oberwerkzeug ist in seiner Normalposition in Richtung auf das Unterwerkzeug abgesenkt und bei Unterbrechung eines Abfüllvorganges in eine vom Unterwerkzeug entfernte Oberposition zurückgezogen. In dem Verfahren zum Versiegeln von Verpackungsbehältern wird eine Siegelelektrode auf eine zum Versiegeln geeignete Temperatur erhitzt und gegen ein Widerlager gedrückt, das zur Aufnahme einer zum Versiegeln geeigneten Druckkraft nachgiebig gelagert ist. Ein als Widerlager ausgebildetes Unterwerkzeug wird in Richtung auf ein mit der Siegelelektrode versehenes nachgiebig gelagertes Oberwerkzeug angehoben und mit einem Siegeldruck gegen dieses gepreßt. Ein Verpackungsbehälter wird auf einer Transportvorrichtung in Richtung auf die Siegelstation transportiert. Oberhalb eines zu versiegelnden Verpackungsbehälters wird eine Folie zur Siegelstation gefördert und ein den Verpackungsbehälter im Bereich seiner Öffnung abdeckender Verschlußstreifen ausgestanzt und auf einen die Öffnung umgebenden Rand aufgelegt. Der Verpackungsbehälter wird von der Transportvorrichtung abgekoppelt und durch Anheben des Unterwerkzeuges gegen die erhitzte Siegelelektrode des Oberwerkzeuges versiegelt.

## Beschreibung

Die Erfindung betrifft eine Vorrichtung zum Versiegeln von Verpackungsbehältern, deren Öffnung mit einer Folie verschließbar ist, die unter Einfluß von Hitze mit einem die Öffnung umgebenden Rand verbindbar ist.

Darüberhinaus betrifft die Erfindung ein Verfahren zum Versiegeln von Verpackungsbehältern, deren Öffnung mit einer Folie verschlossen wird, die unter dem Einfluß von Hitze mit einem die Öffnung umgebenden Rand verbunden wird.

Die bisher gebräuchlichen Vorrichtungen und Verfahren zum Versiegeln von Verpackungsbehältern besitzen den entscheidenden Nachteil, daß ihre Umstellung von einer Form von Verpackungsbehältern auf eine andere Form von Verpackungsbehältern erhebliche Schwierigkeiten bereitet. Diese Schwierigkeiten gehen einher mit unsauberen Versiegelungsnähten. Die Abdeckungsfolien werden nicht fest mit den sie aufnehmenden Rändern verbunden, sodaß während der Vielzahl von Transportwegen, auf denen die Verpackungsbehälter transportiert werden, nicht selten sich die aufgesiegelten Folien lockern, sodaß der Inhalt aus dem Verpackungsbehälter in mehr oder minder großen Mengen austritt.

Aufgabe der vorliegenden Erfindung ist es daher, die Vorrichtung der einleitend genannten Art so zu gestalten, daß bei einer Vielzahl von zu versiegelnden Verpackungsbehältern eine große Sicherheit gegen das Auftreten von Undichtigkeiten erzielt wird.

Diese Aufgabe wird erfindungsgemäß bei der Vorrichtung dadurch gelöst, daß zur Verbindung der Folien mit dem Rand eine Siegelstation vorgesehen ist, die aus einem Oberwerkzeug und einem Unterwerkzeug besteht, und die beiden Werkzeuge auf einander zu bewegbar sind, bis eine beheizte Siegelelektrode eines der beiden Werkzeuge den mit der Folie bedeckten Rand gegen das jeweils andere Werkzeug beaufschlagt.

Auf diese Weise kann bei einer Vielzahl von Formen, die üblicherweise von Verpackungsbehältern benutzt werden, ein sicherer Verschluß der Folie mit den Verpackungsbehältern erreicht werden. Die Versiegelung zeichnet sich durch eine dauerhafte Dichtigkeit aus, ohne daß ein Aufplatzen der Siegelnaht zu befürchten ist. Darüberhinaus kann eine schnelle Umstellung auf unterschiedliche Behälterformen vorgenommen werden. Dadurch wird das Verschließen der Behälter erheblich vereinfacht und verbilligt.

Hinsichtlich des erfindungsgemäßen Verfahrens wird die Aufgabe dadurch gelöst, daß eine Siegelelektrode auf eine zum Versiegeln geeignete Temperatur erhitzt und gegen ein Widerlager gedrückt wird, das unter einer zum Versiegeln geeigneten Druckkraft nachgiebig gelagert ist. Durch die Verwendung eines nachgiebig gelagerten Widerlagers steigt der zum Versiegeln aufgewendete Druck kontinuierlich bis zu einem Höchstpunkt an. Dadurch ist für eine Erwärmung der Siegelnaht gesorgt, die dazu führt, daß eine lückenlose Verpressung der aneinander gegenüberliegenden Teile entsteht. Darüberhinaus wird das Anschwellen des Druckes so dosiert, daß er im Hinblick auf die aufgewandte Wärme zu einer festen Verschmelzung der miteinander zu verbindenden Oberflächen führt.

Gemäß einer weiteren bevorzugten Ausführungsform der Erfindung ist die Siegelelektrode mit dem Oberwerkzeug verbunden, das in Richtung auf das Unterwerkzeug absenkbar ausgebildet ist. Durch die Absenkung gerät das Oberwerkzeug in den Einflußbereich des Unterwerkzeuges. Dieses wird zeitlich so gesteuert, daß zwar eine gute Versiegelung der miteinander zu verbindenden Teile erfolgt, daß aber andererseits eine Überhitzung der Naht und damit eine Überschreitung der optimalen Verbindungsparameter vermieden wird.

Gemäß einer weiteren bevorzugten Ausführungsform der Erfindung befindet sich das Oberwerkzeug abgesenkt in seiner Normalposition, während es bei einer Unterbrechung des Abfüllvorganges in eine vom Unterwerkzeug entfernte Oberposition zurückgezogen ist. Auf diese Weise ist dafür gesorgt, daß bei einem in die Oberposition zurückgezogenen Oberwerkzeug sämtliche Arbeiten an einer Abfüllmaschine durchgeführt werden könnte, die notwendig sind, um diese wieder instand zu setzen, ohne daß die Gefahr einer Berührung des heißen Siegelwerkzeuges besteht.

Gemäß einer weiteren Ausführungsform der Erfindung ist das Oberwerkzeug in seiner Normalposition in Richtung einer vom Unterwerkzeug auf es ausgeübten Kraft nachgiebig gelagert. Durch diese nachgiebige Lagerung wird vermieden, daß die beiden Werkzeuge beim Versiegeln hart aufeinandertreffen. Sie legen sich zum Zwecke des Versiegelns in einem kontinuierlichen Annäherungsvorgang welch aneinander an, sodaß harte Schläge auf das relativ teure Oberwerkzeug vermieden werden.

Gemäß einer weiteren bevorzugten Ausführungsform der Erfindung ist zur Förderung des Verpackungsbehälters in die Siegelstation eine aus Transportstäben bestehende Transportvorrichtung vorgesehen, deren quer zur Transportrichtung verlaufende Transportstäbe mit in Transportrichtung bewegten Ketten verbunden und als Auflage für den Verpackungsbehälter ausgebildet sind. Diese Ausführungsform einer Transportvorrichtung begünstigt eine Verwendung von Transportbehältern unterschiedlicher Form. Entsprechend der jeweiligen Form des Verpackungsbehälters können die Transportstäbe mehr oder minder weit von einander entfernt werden, sodaß jeder beliebigen Form von Verpackungsbehältern Rechnung getragen werden kann.

Gemäß einer weiteren bevorzugten Ausführungsform der Erfindung sind die Transportstäbe über Führungen mit einer Kette verbunden, in denen die Transportstäbe in Transportrichtung verschieblich gelagert sind. Auf diese Weise erhalten die Transportstäbe eine sichere und trotzdem flexible Führung, die entsprechend einer weiteren bevorzugten Ausführungsform der Erfindung dazu ausgenutzt werden kann, um auch ausgefallenen Behältertypen eine Aufnahme in der Transportvorrichtung und der Siegelvorrichtung zu verschaffen.

Gemäß einer weiteren bevorzugten Ausführungsform der Erfindung ist im Bereich der Siegelstation eine einen Verpackungsbehälter aufnehmende Ablage vorgesehen, von der das Unterwerkzeug den Verpackungsbehälter in Richtung auf das Oberwerkzeug anhebt. Durch diese Fähigkeit erhält das Unterwerkzeug seine Funktion, den Verpackungsbehältern nicht nur anzuheben, sondern auch die zum Versiegeln notwendigen Kräfte aufzuwenden. Dadurch wird die gesamte Anlage einfach, billig und leicht überschaubar.

Gemäß einer weiteren bevorzugten Ausführungsform der Erfindung sind die Transportstäbe in den Führungen führend gelagert. Dadurch entstehen einerseits Vorteile bei der Ausrichtung der Transportstäbe entsprechend der jeweils verwendeten Form eines Verpackungsbehälters und andererseits die Einhaltung bestimmter enger Toleranzen bezüglich der Behälterführung. Diese engen Toleranzen betragen gemäß einer weiteren bevorzugten Ausführungsform der Erfindung nur 0,2 mm.

Um den Versiegelungsvorgang zu beschleunigen, ist gemäß einer weiteren bevorzugten Ausführungsform der Erfindung die Verschiebevorrichtung zum Verschieben der Transportstäbe als eine Öffnungsvorrichtung ausgebildet, die aus mindestens zwei auf einer in Richtung auf die Transportstäbe verschiebbaren Halterungsplatte mit einem Ende schwenkbar gelagerten Hebeln besteht, von denen ein jeweils freies Ende bei verschobener Platte hinter jeweils einen den Verpackungsbehältern unterstützenden Transportstab greifen und diesen vom Verpackungsbehälter weg bewegend angeordnet ist. Diese Öffnungsvorrichtung besitzt den Vorteil einer einfachen und sehr betriebssicheren Funktionsweise. Sie kann gemäß einer weiteren bevorzugten Ausführungsform der Erfindung unmittelbar mit der Funktion des Unterwerkzeuges verbunden werden, sodaß beide, sowohl das Unterwerkzeug als auch die Öffnungsvorrichtung vom gleichen Hubzylinder angehoben werden können. Die Bewegungen sind deswegen auf ideale Weise synchronisiert, sodaß das Unterwerkzeug erst zum Einsatz gelangen kann, wenn die Öffnungsvorrichtung eine Abkoppelung des zu verschließenden Verpackungsbehälters von den Transportstäben vorgenommen hat.

Gemäß einer weiteren bevorzugten Ausführungsform der Erfindung überragen die Hebel der Öffnungsvorrichtung eine dem Verpackungsbehälter zugewandte Oberkante des Unterwerkzeuges. Dadurch kommen die an den Transportstäben zum Eingriff, bevor das Unterwerkzeug eine Versiegelung an der heißen Siegelelektrode vornehmen kann. Dadurch ist auf einfache und sehr betriebssichere Weise der Notwendigkeit Rechnung zutragen worden, einer Versiegelung des Verpackungsbehälters vorzunehmen, wenn er von der Transportvorrichtung abgekoppelt ist.

Hinsichtlich des Verfahrens besteht eine bevorzugte Ausführungsform der Erfindung darin, daß die aufzusiegelnde Folie zwischen zwei gegensinnig rotierenden Walzen gefördert und zwischen diesen der Verschlußstreifen ausgestanzt wird. Auf diese Weise wird der Vortrieb der Folie von den gleichen Walzen erzeugt, die auch ein Ausstanzen der Deckelfolie vornehmen. Auch dadurch entsteht eine Vereinfachung und Verbesserung der Treffsicherheit beim Ablauf des gesamten Verfahrens.

Schließlich wird bei einer weiteren bevorzugten Ausführungsform des Verfahrens zwei einander bezüglich des Verpackungsbehälters gegenüberliegenden Transportstäbe voneinander entfernt und dadurch ein den Verpackungsbehälter umgebender Rand von den Transportstäben abgehoben, während gleichzeitig der Verpackungsbehälter in Richtung auf die Versiegelungselektrode angehoben und die Folie auf den Rand aufgesiegelt wird. Dadurch können die einzelnen Verfahrensabläufe schnell aufeinander folgen, sodaß mit dem erfindungsgemäßen Verfahren kurze Taktzeiten erzielt werden können.

Weitere Einzelheiten der Erfindung ergeben sich aus der nachfolgend ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine Übersichtszeichnung über eine Siegelstation,
- Figur 2:: einen Ausschnitt X aus der Siegelstation gemäß Figur 1,
- Figur 3:: eine Übersichtsskizze einer Siegelstation mit einer Folienzuführung,
- Figur 4:: eine Draufsicht auf eine Führung für einen Transportstab,
- Figur 5:: eine Übersichtszeichnung für eine Öffnungsvorrichtung,
- Figur 6:: einen Ausschnitt entlang der Schnittlinie VI - VI in Figur 4 und
- Figur 7:: eine Systemskizze zur Transportvorrichtung.

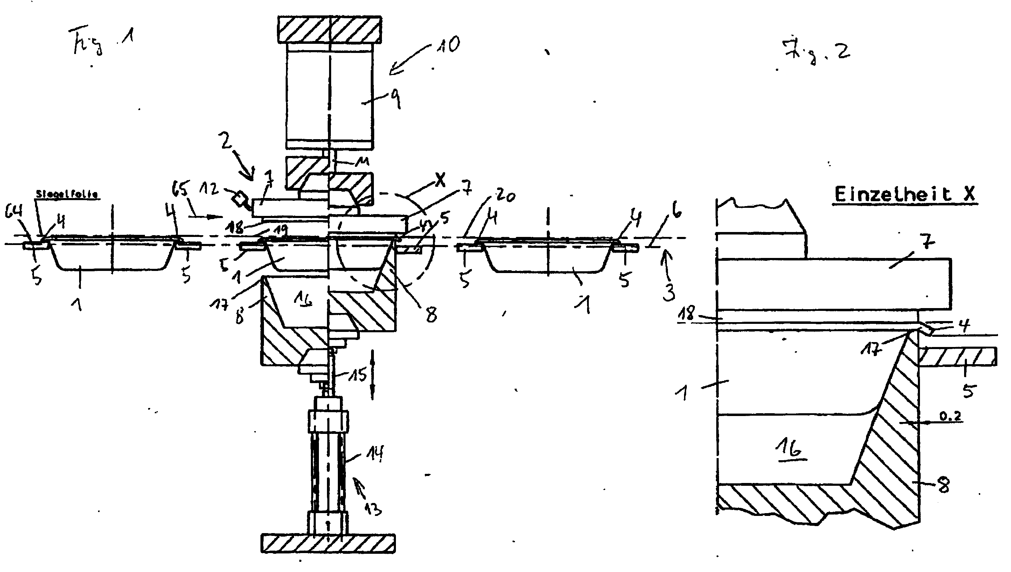

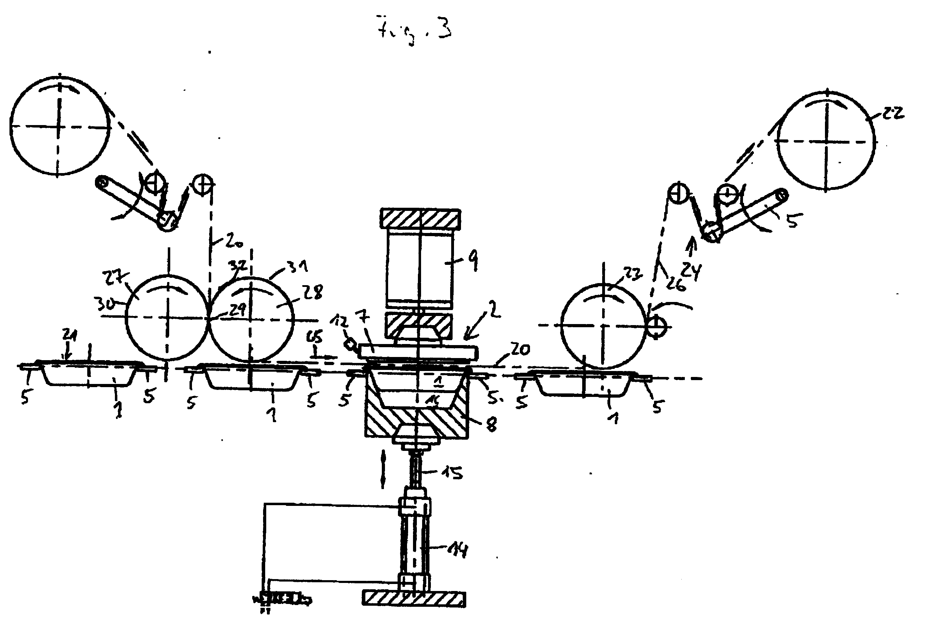

Eine Vorrichtung zum Versiegeln von Verpackungsbehältern 1 besteht im wesentlichen aus einer Siegelstation 2 und einer Transportvorrichtung 3. Die Verpackungsbehälter 1 liegen mit ihren Rändern 4 auf Transportstäben 5 auf, die zwischen einander paralell verlaufenden Ketten sich quer zu deren Längsrichtung erstrecken. Die Ketten 6 sind lediglich als strichpunktierte Linien dargestellt. Sie werden von nicht dargestellten Kettenrädern angetrieben und verlaufen durch die Siegelstation 2.

Diese Siegelstation 2 besteht im wesentlichen aus einem Oberwerkzeug 7 und einem Unterwerkzeug 8, die quer zur Längsrichtung der Ketten 6 in Richtung auf einen zwischen den Transportstäben 5 hängenden Verpackungsbehälter 1 bewegt werden können. Zur Durchführung dieser Bewegungsvorgänge sind jeweils Antriebe vorhanden. Das Oberwerkzeug 7 wird von einem Pneumatikantrieb 10 quer zur Längsrichtung der Ketten 6 bewegt. Er besteht aus einem Luftzylinder 9, in dem ein von Pressluft beaufschlagter Kolben beweglich gelagert ist, an dessen Kolbenstange 11 das Oberwerkzeug 7 befestigt ist. Das Oberwerkzeug 7 ist mit einer elektrisch beheizten Siegelelektrode 18 ausgerüstet, die an einer dem Verpackungsbehälter 1 zugewandten Unterseite des Oberwerkzeuges 7 befestigt ist und über einen Anschluß 12 mit elektrischem Strom versorgt wird.

Das Unterwerkzeug 8 wird von einem Hydraulikantrieb 13 quer zur Längsrichtung der Ketten 6 in Richtung auf das Oberwerkzeug 7 bewegt. Dieser Hydraulikantrieb 13 besitzt einen Hydraulikzylinder 14, in dem ein von einer Druckflüssigkeit beaufschlagter nicht dargestellter Hydraulikkolben beweglich gelagert ist. Dieser ist über einer Kolbenstange 15 mit dem Unterwerkzeug 8 verbunden.

An seiner dem Verpackungsbehälter 1 zugewandten Oberseite besitzt das Unterwerkzeug 8 eine Ausnehmung 16, die der Form des Verpackungsbehälters 1 angepaßt ist. Diese Ausnehmung 16 nimmt den Verpackungsbehälter 1 auf, wenn das Unterwerkzeug 8 seine dem Oberwerkzeug 7 zugewandte obere Position erreicht hat. Dabei liegt der Verpackungsbehälter 1 mit seinem Rand 4 auf einer die Ausnehmung 16 umgegebenden oberen Begrenzung 17 des Unterwerkzeuges 8 auf und wird von dieser gegen die Versiegelungselektrode 18 des abgesenkten Oberwerkzeuges 7 gepreßt. Dabei ist der Rand 4 von den ihn zuvor tragenden Transporstäben 5 abgehoben. Dabei wird der zu versiegelnde Verpackungsbehälter 1 lediglich um etwa 5 mm in Richtung auf die Versiegelungselektrode 18 bewegt.

Die Versiegelung erfolgt in Höhe einer auf den Verpackungsbehälter 1 aufzusiegelnden Folie 19. Diese wird als eine Folienbahn 20 zwischen dem Oberwerkzeug 7 und dem Unterwerkzeug 8 hindurchgeführt. Sie verläuft oberhalb der Ketten 6 in einem Abstand von etwa 5 mm.

Während der Durchführung der Versiegelung wird der Verpackungsbehälter 1 von der Transportvorrichtung 3 nicht weiter befördert. Er ist von den Transportstäben 5 abgekoppelt.

Während des Aufsiegelns der Folie 19 der Siegelstation 2 ist bereits ein nicht dargestellter Verschlußstreifen aus der Folienbahn 20 in der Größe einer Öffnung 21 aus der Folienbahn 20 ausgestanzt. Dieser ausgestanzte Verschlußstreifen wird mit der Folienbahn 20 in Richtung auf die Siegelstation 2 transportiert und dort auf die Ränder 4 des Verpackungsbehälters 1 aufgesiegelt. Nach der Beendigung dieser Versiegelung wird die Folienbahn 20 in Richtung auf eine Aufwickelrolle 22 weiter transportiert, indem sie zuvor an einer Umlenkrolle 23 aus der Ebene umgelenkt worden ist, in der die Versiegelung stattgefunden hat. Zwischen der Umlenkrolle 23 und der Aufwickelrolle 22 ist ein Bahnspannungshalter 24 mit einem federbelasteten Hebel 25 vorgesehen. Auf die Aufwickelrolle 22 wird die Folienbahn 20 als ein Lochstreifen 26 aufgewickelt, dessen Löcher durch das Ausstanzen der Verschlußstreifen entstanden sind.

Dieses Ausstanzen erfolgt zwischen zwei gegensinnig zueinander rotierenden Walzen 27, 28, die in Förderrichtung vor der Siegelstation 2 angeordnet sind. Zwischen den beiden Walzen 27, 28 befindet sich ein Förderspalt 29 im Bereich der größten Annäherung ihrer Walzenoberflächen 30, 31. Dieser Förderspalt 29 ist so ausgebildet, daß durch ihn die Folienbahn 20 hindurchgeleitet werden kann, von den beiden gegenüberliegenden Walzenoberflächen 30, 31 jedoch so stark beaufschlagt wird, daß die Folienbahn 20 entsprechend der Umdrehung der beiden Walzen 27, 28 durch einen Friktionsantrieb in Richtung auf die Siegelstation 2 gefördert wird. Dabei wird aus der Folienbahn 20 der Verschlußstreifen im Bereich des Förderspaltes 29 ausgestanzt. Zu diesem Zwecke ist eine der beiden Walzen 28 mit einem dem Verschlußstreifen entsprechenden Profil 32 auf ihrer Oberfläche 31 versehen, während die Oberfläche 30 der anderen Walze 27 glatt ist. Die mit der glatten Oberfläche 30 versehende Walze 27 drückt die Folienbahn 20 auf das Profil 32, das an seiner oberen Begrenzung mit Schneidkanten vergehen ist. Dadurch wird aus der Folienbahn 20 der Verschlußstreifen ausgestanzt. Er bleibt jedoch mit seinen Rändern im Bereich der Folienbahn 20 und wird von dieser bis zur Siegelstation 2 gefördert. Erst nachdem der Verschlußstreifen auf den Verpackungsbehälter 1 aufgesiegelt worden ist, ist innerhalb der Folienbahn 20 ein dem Verschlußstreifen entsprechendes Loch entstanden, sodaß die Folienbahn 20 als Lochstreifen 26 in Richtung auf die Aufwickelrolle 22 transportiert wird.

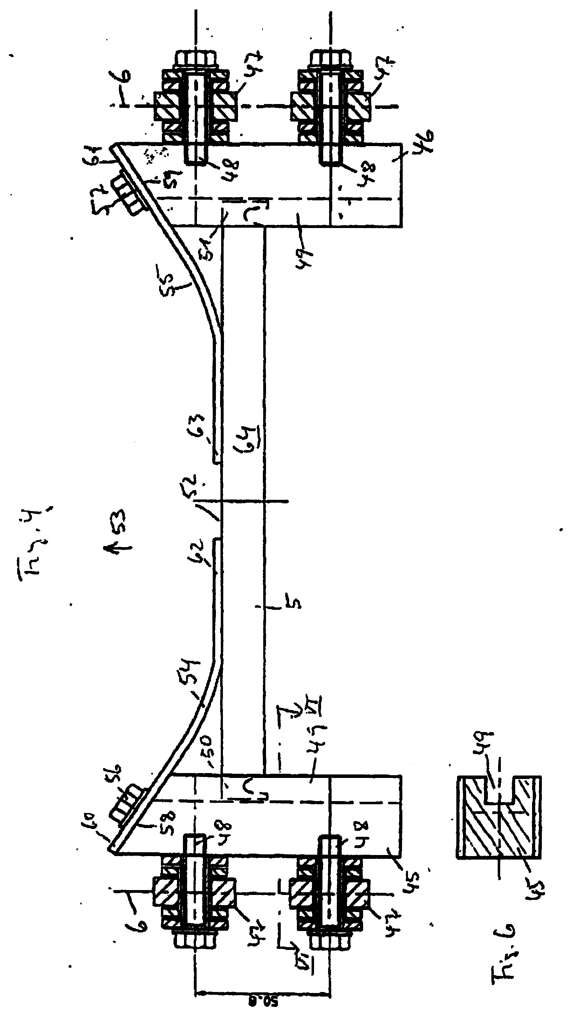

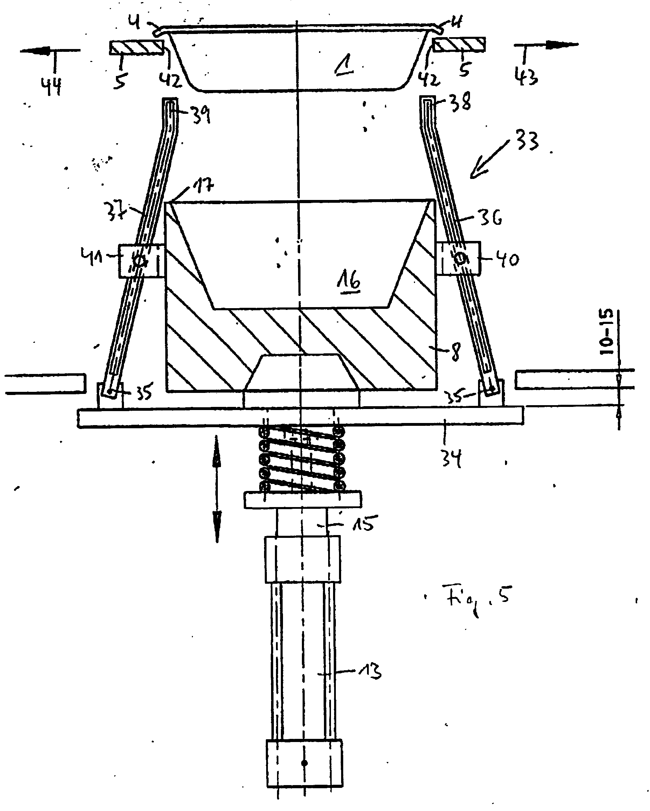

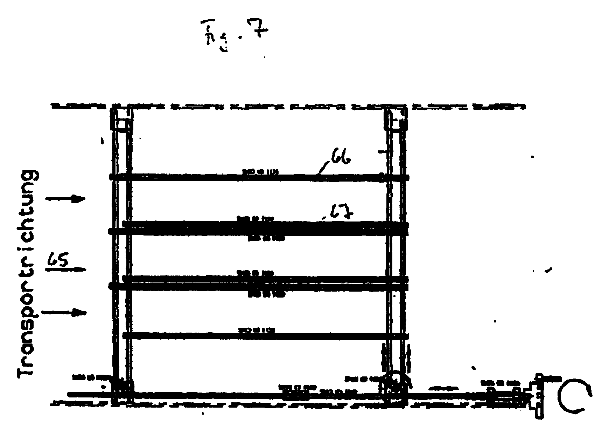

Zur Abkoppelung des zu versiegelnden Verpackungsbehälters 1 von den Transportstäben 5 ist eine Öffnungsvorrichtung 33 vorgesehen, mit deren Hilfe die Abkoppelung des Verpackungsbehälters 1 von den Transportstäben exakt in dem Zeitpunkt erfolgt, in dem die Versiegelung des Verpackungsbehälters 1 stattfindet. Zu diesem Zwecke sind 4 auf einer Grundplatte 34 jeweils um Schwenkpunkten 35 schwenkbar gelagerte Hebel 36, 37 angeordnet, von denen in der Figur 5 nur zwei einander gegenüberliegende dargestellt sind. Diese Hebel 36, 37 überragen mit ihren freien Enden 38, 39 die obere Begrenzung 17 des Unterwerkzeuges 8 und sind in diesem Bereich 38, 39 aus ihrem ansonsten geraden Verlauf voneinander weg abgewinkelt. Darüberhinaus werden die Hebel 36, 37 bei ihren Schwenkbewegungen um die Schwenkpunkte 35 von Führungen 40, 41 gesteuert. Diese Führungen 40, 41 können als reibungsarme nicht dargestellte Steuerkurven ausgebildet sein. Sie sind so gestaltet, daß die freien Enden 38, 39 beim Anheben des Unterwerkzeuges 8 hinter eine jeweils dem Verpackungsbehälter 1 zugewandte Kante 42 der den Rand 4 des Verpackungsbehälters 1 tragenden Transportstäbe greifen. Beim weiteren Anheben der Grundplatte 34 und damit des auf dieser gelagerten Unterwerkzeuges 8 führen die Hebel 36, 37 Schwenkbewegungen um den Schwenkpunkt 35 aus und verschieben dabei die Transportstäbe 5 in einander entgegengesetzte Richtungen 43, 44. Bei diesem Auseinanderschieben der Transportstäbe 5 werden die Ränder 4 des Verpackungsbehälters 1 von diesen abgehoben, sodaß der Behälter 1 mit seinen Rändern nunmehr auf der oberen Begrenzung 17 des Unterwerkzeuges 8 aufliegt und im übrigen von der Ausnehmung 16 aufgenommen wird.

Zu diesem Zwecke ist die Grundplatte 34 auf der Kolbenstange 15 des Hydraulikantriebes 13 befestigt. Auf diese Weise wird eine ideale Synchronisation der Bewegungsvorgänge erzeugt, die einerseits zum Verschwenken der Hebel 36, 37 und damit zum Abheben des Verpackungsbehälters 1 von den Transportstäben 5 führt und andererseits zum Anheben des Unterwerkzeuges 8, mit dessen Hilfe der Verpackungsbehälter 1 in Richtung auf das Oberwerkzeug 7 angehoben und gegen die Versiegelungselektrode 18 gepreßt wird.

Auf Grund der vom Hydraulikantrieb 13 vorgenommenen Servosteuerung des Unterwerkzeuges 8 wird dieses mit sehr geringer Geschwindigkeit gegen die vergleichsweise teure Versiegelungselektrode 18 des Oberwerkzeuges 7 gefördert, sodaß sich der mit dem Verschlußstreifen bedeckte Rand 4 des Verpackungsbehälters 1 sanft und ohne Stoß an die Versiegelungselektrode 18 anlegt. Dadurch werden mechanische Beschädigungen der Versiegelungselektrode 18 vermieden.

Während des Siegeln wird der Verpackungsbehälter 1 nur ca. 5 mm angehoben, sodaß beim Versiegeln innerhalb des Verpackungsbehälters 1 das verpackte Produkt schonend behandelt wird. Während des Siegelns ist der Kolben des Luftzylinders 9 etwa 1,5 mm in den Luftzylinder 9 hineingedrückt, bis er die zum Versiegeln benötigte Gegenkraft gegenüber dem ihm beaufschlagenden Unterwerkzeug 8 entfaltet. Der Hydraulikantrieb 13 wird vom Drucköl gebremst, sodaß harte Anschläge durch mechanische Endlagen vermieden werden.

Die Verschiebung der Transportstäbe 5 erfolgt innerhalb von Führungen 45, 46, die fest mit den im einzelnen dargestellten Ketten 6 verbunden sind. Zu diesem Zwecke werden die einzelnen Kettenglieder 47 über Schrauben 48 mit den Führungen 45, 46 verbunden. In den Führungen 45, 46 sind einander zugewandte Führungsschlitze 49 vorgesehen, in die die Transportstäbe 5, die einen rechteckigen Querschnitt aufweisen, mit ihren jeweiligen Enden 50, 51 hineinragen und in denen sie zur Ausführung von quer zu ihrer Längsrichtung verlaufenden Bewegungen geführt werden.

Dabei liegen sie mit einer ihrer Längskanten 52, die in Verschieberichtung 53 der Transportstäbe 5 vorne liegt, an Blattfedern 54, 55 an, die an den Führungen 45, 46 befestigt sind. Diese Befestigung erfolgt zweckmäßigerweise mit Hilfe von Schrauben 56, 57, durch die die Blattfedern 54, 55 mit in Verschieberichtung 53 vorne liegenden Stirnflächen 58, 59 der Führungen 45, 46 verschraubt sind.

Die Stirnflächen 58, 59 verlaufen schräg zur Verschieberichtung 53 der Führungen 45, 46, etwa in einem Winkel von 45 °. In entsprechender Weise verlaufen die Blattfedern 54, 55 in ihren mit den Führungen 45, 46 verschraubten oberen Teilen 60, 61, die flach auf den Stirnflächen 58, 59 aufliegen. Gegenüber dieser Richtung der Blattfedern 54, 55 sind sie im Bereich ihrer den Transportstäben zugewandten unteren Enden 62, 63 in eine paralell zu den Transportstäben 5 verlaufende Richtung abgewinkelt, sodaß sie die Längskante 52 großflächig beaufschlagt. Eine Verschiebung der Transportstäbe 5 kann daher nur mit einer Verformung der Blattfedern 54, 55 in Verschieberichtung 53 einhergehen. Sobald die Beaufschlagung dieser Transportstäbe 5 in Verschieberichtung 53 beispielsweise durch die Enden 38, 39 der Hebel 36, 37 endet, werden die Transportstäbe 5 von den Blattfedern 54, 55 wieder in ihre Ausgangslage zurückgeschoben. In dieser liegen die Ränder 4 eines Verpackungsbehälters 1 auf einer quer zur Längskante 52 verlaufenden oberen Fläche 64 eines jeden Transportstabes 5 auf.

Die gefüllten Verpackungsbehälter 1 werden mit ihren Rändern 4 auf den Transportstäben 5 abgesetzt. Diese fördern den Verpackungsbehälter 1, der in Transportrichtung 65 der Transportvorrichtung 3 von Seitenführungen 66, 67 geführt ist, in den Bereich der Siegelstation 2. Paralell dazu werden die von den beiden Walzen 27, 28 ausgeschnittenen Verschlußstreifen von der Folienbahn 20 in den Bereich der Siegelstation 2 gefördert.

In der Siegelstation 2 wird der zu versiegelnde Verpackungsbehälter 1 durch die Öffnungsvorrichtung 33 von den Transportstäben 5 getrennt, in dem der Hydraulikantrieb 13 die Grundplatte 34 und die auf ihnen schwenkbar gelagerten Hebel 36, 37 anhebt. Dabei greifen die Hebel 36, 37 mit ihren freien Enden 38, 39 hinter die Kante 42 der Transportstäbe 5 und werden gleichzeitig durch die Führungen 40, 41 um die Schwenkpunkte 35 verschwenkt.

Nach dem Abheben der Ränder 4 des Verpackungsbehälters 1 von den Transportstäben 5 wird der Verpackungsbehälter 1 von der Ausnehmung 16 des Unterwerkzeuges 8 aufgenommen und in Richung auf daa Oberwerkzeug 7 gefördert. Dabei legt sich der Verschlußstreifen auf die Ränder 4 des Verpackungsbehälters 1, sodaß er aus der Folienbahn 20 herausgetrennt wird.

Durch weiteres Anheben des Verpackungsbehälters 1 werden die Ränder 4 und der die Öffnung des Verpackungsbehälters 1 verschließende Verschlußstreifen gegen die heiße Versiegelungselektrode 18 des Oberwerkzeuges 7 gedrückt. Durch diesen aufgewendeten Druck wird die Kolbenstange 11 des Pneumatikantriebes 10 um 1,5 mm in den Luftzylinder 9 hineingedrückt. In dieser Stellung erzeugt der Pneumatikantrieb 10 den zum Versiegeln des Verpackungsbehälters 1 notwendigen Gegendruck, sodaß eine Versiegelung des Verschlußstreifens auf dem Verpackungsbehälter 1 stattfindet.

Sodann wird das Unterwerkzeug 8 wieder abgesenkt. Nachdem es den Bereich der sich einander gegenüberliegenden Transportstäbe 5 verlassen hat, werden diese durch die Blattfedern 54, 55 wieder in ihre die Ränder 4 des Verpackungsbehälters 1 unterstützende Ausgangslage zurückgedrückt, sodaß durch weiteren Vorschub der Transportvorrichtung 3 der inzwischen versiegelten Verpackungsbehälter 1 aus dem Bereich der Siegelstation 2 abgefördert wird. Durch das Absenken des Unterwerkzeuges 8 wird auch die Folienbahn 20 zum Weitertransport in Richtung auf die Aufwickelrolle 22 entlastet, sodaß auf diese der nach Entnahme des Verschlußstreifens verbliebene Lochstreifen aufgewickelt werden kann.

## Patentansprüche

1. Vorrichtung zum Versiegeln von Verpackungsbehältern, deren Öffnung mit einer Folie verschließbar ist, die unter Einfluß von Hitze mit einem die Öffnung umgebenden Rand verbindbar ist, dadurch gekennzeichnet, daß zur Verbindung der Folie (19) mit dem Rand (4) eine Siegelstation (2) vorgesehen ist, die aus einem Oberwerkzeug (7) und einem Unterwerkzeug (8) besteht, und die beiden Werkzeuge (7, 8) aufeinander zu bewegbar sind, bis eine beheizte Siegelelektrode (18) eines der beiden Werkzeuge (7, 8) den mit der Folie (19) bedeckten Rand (4) gegen das jeweils andere Werkzeug (7) beaufschlagt.

2. Vorrichtung nach Anspruch 1, dadurch gekennzeichnet, daß die Siegelelektrode (18) mit dem Oberwerkzeug (7) verbunden ist, das in Richtung auf das Unterwerkzeug (8) absenkbar ausgebildet ist.

3. Vorrichtung nach Anspruch 1 oder 2, dadurch gekennzeichnet, daß das Oberwerkzeug (7) in seiner Normalposition in Richtung auf das Unterwerkzeug (8) abgesenkt ist und bei Unterbrechung eines Abfüllvorganges in eine vom Unterwerkzeug (8) entfernte Oberposition zurückgezogen ist.

4. Vorrichtung nach einen der Ansprüche 1 bis 3, dadurch gekennzeichnet, daß das Oberwerkzeug (7) als Antrieb einen Luftzylinder (9) aufweist.

5. Vorrichtung nach Anspruch 4, dadurch gekennzeichnet, daß der Luftzylinder (9) hydraulich gesteuert ist.

6. Vorrichtung nach Anspruch 4, dadurch gekennzeichnet, daß der Luftzylinder (9) mechanisch gesteuert ist.

7. Vorrichtung nach einen der Ansprüche 1 bis 6, dadurch gekennzeichnet, daß das Oberwerkzeug (7) in seiner Normalposition in Richtung einer vom Unterwerkzeug (8) auf es ausgeübten Kraft nachgiebig gelagert ist.

8. Vorrichtung nach Anspruch 7, dadurch gekennzeichnet, daß der das Oberwerkzeug (7) steuernde Luftzylinder (9) mit einem in Längsrichtung gering verschieblichen Kolben versehen ist, der in seinem auf Grund der Einwirkung des verschieblichen Unterwerkzeuges (8) verschobenen Zustand eine zum Versiegeln benötigte Gegenkraft besitzt.

9. Vorrichtung nach Anspruch 8, dadurch gekennzeichnet, daß die Verschiebung um etwa 1,5 mm vorgesehen ist.

10. Vorrichtung nach Anspruch 1 bis 9, dadurch gekennzeichnet, daß das Unterwerkzeug (8) für seinen Antrieb einen Hydraulikzylinder (14) aufweist.

11. Vorrichtung nach Anspruch 10, dadurch gekennzeichnet, daß der Hydraulikzylinder (14) eine das Auftreffen des Unterwerkzeuges (8) auf das Oberwerkzeug (7) steuernde Hydrauliksteuerung (13) aufweist.

12. Vorrichtung nach Anspruch 11, dadurch gekennzeichnet, daß die Hydrauliksteuerung (13) mit einer geringen Auftreffgeschwindigkeit des Unterwerkzeuges (8) auf das Oberwerkzeug (7) versehen ist.

13. Vorrichtung nach einen der Ansprüche 9 bis 12, dadurch gekennzeichnet, daß der zu versiegelnde Verpackungsbehälter (1) während des Siegelvorganges nur wenig angehoben ist.

14. Vorrichtung nach Anspruch 13, dadurch gekennzeichnet, daß der Verpackungsbehälter (1) während des Siegelvorganges um 5 mm angehoben ist.

15. Vorrichtung nach einem der Ansprüche 1 bis 14, dadurch gekennzeichnet, daß während des Siegeins ein den Verpackungsbehälter (1) transportierender Vorschub abgeschaltet ist.

16. Vorrichtung nach einem der Ansprüche 1 bis 15, dadurch gekennzeichnet, daß zur Förderung des Verpackungsbehälters (1) in die Siegelstation (2) eine Transportvorrichtung (3) vorgesehen ist, deren quer zur Transportrichtung (65) verlaufenden Transportstäbe (5) mit in Transportrichtung (65) bewegten Ketten (6) verbunden und als Auflage für den Verpackungsbehälter (1) ausgebildet sind.

17. Vorrichtung nach Anspruch 16, dadurch gekennzeichnet, daß die Transportstäbe (5) über Führungen (45, 46) mit der Kette (6) verbunden sind, in denen die Trasportstäbe (5) in Transportrichtung (65) verschieblich gelagert sind.

18. Vorrichtung nach Anspruch 16 oder 17, dadurch gekennzeichnet, daß die Transportstäbe (5) zur Aufnahme unterschiedlich gestalteter Verpackungsbehälter (1) innerhalb der Führungen (45, 46) verschieblich gelagert sind.

19. Vorrichtung nach einem der Ansprüche 16 bis 18, dadurch gekennzeichnet, daß eine Steuerung zur Verschiebung der Transportstäbe (5) innerhalb der Führungen (45, 46) vorgesehen ist.

20. Vorrichtung nach Anspruch 19, dadurch gekennzeichnet, daß eine Verschiebung der Transportstäbe (5) zum Absetzen eines Verpackungsbehälters (1) auf einer Ablage vorgesehen ist.

21. Vorrichtung nach Anspruch 20, dadurch gekennzeichnet, daß im Bereich der Siegelstation (2) eine einen Verpackungsbehälter (1) aufnehmende Ablage vorgesehen ist, von der das Unterwerkzeug (8) den Verpackungsbehälter (1) in Richtung auf das Oberwerkzeug (7) anhebt.

22. Vorrichtung nach Anspruch 20 oder 21, dadurch gekennzeichnet, daß die Ablage als eine den Verpackungsbehälter (1) an seinem äußersten Rand (4) erfassende Unterstützung ausgebildet ist.

23. Vorrichtung nach einem der Ansprüche 16 bis 21, dadurch gekennzeichnet, daß die Transportstäbe (5) in den Führungen (45, 46) federnd gelagert sind.

24. Vorrichtung nach Anspruch 21 bis 23, dadurch gekennzeichnet, daß zwischen den Transportstäben (5) und dem Unterwerkzeug (8) ein sehr enger Abstand vorgesehen ist.

25. Vorrichtung nach Anspruch 24, dadurch gekennzeichnet, daß der Abstand 0,2 mm beträgt.

26. Vorrichtung nach einem der Ansprüche 16 bis 25, dadurch gekennzeichnet, daß in Transportrichtung (65) der Verpackungsbehälter (1) Seitenführungen (66, 67) vorgesehen sind, die die Verpackungsbehälter (1) an ihren jeweils in Transportrichtung (65) verlaufenden Seitenwandteilen beauftragen.

27. Vorrichtung nach Anspruch 26, dadurch gekennzeichnet, daß die Transportstäbe (5) und/oder die Seitenführungen (66, 67) je nach Form der Verpackungsbehälter (1) verstellbar ausgebildet sind.

28. Vorrichtung nach Anspruch 27, dadurch gekennzeichnet, daß zur Verstellung der Transportstäbe (5) und/oder Seitenführungen (66, 67) mindestens eine zentrale Verstelleinrichtung vorgesehen ist.

29. Vorrichtung nach einem der Ansprüche 21 bis 28, dadurch gekennzeichnet, daß zur Steuerung der Verschiebung von Transportstäben (5) innerhalb der Führungen (45, 46) eine stationäre Verschiebevorrichtung vorgesehen ist.

30. Vorrichtung nach Anspruch 29, dadurch gekennzeichnet, daß die Verschiebevorrichtung als eine die Transportstäbe (5) voneinander weg verschiebende Öffnungsvorrichtung (33) ausgebildet ist.

31. Vorrichtung nach Anspruch 30, dadurch gekennzeichnet, daß die Öffnungsvorrichtung (33) die Transportstäbe (5) voneinander weg entgegen einer in den Führungen (45, 46) wirkenden Federkraft (54,55) beaufschlagten.

32. Vorrichtung nach Anspruch 30 oder 31, dadurch gekennzeichnet, daß die Öffnungsvorrichtung (33) aus mindestens zwei auf einer in Richtung auf die Transportstäbe (5) verschieblichen Grundplatte (34) mit an einem Ende schwenkbar gelagerten Hebel (36, 37) besteht, von denen ein jeweils freies Ende (38, 39) bei verschobener Platte hinter jeweils einen den Verpackungsbehälter (1) unterstützenden Transportstab (5) greifen und diesen vom Verpackungsbehälter (1) weg bewegend beaufschlagen.

33. Vorrichtung nach einem der Ansprüche 30 bis 32, dadurch gekennzeichnet, daß die Hebel (36, 37) mit einer ihre Schwenkbewegung beeinflussenden Steuerung versehen sind.

34. Vorrichtung nach einem der Ansprüche 30 bis 33, dadurch gekennzeichnet, daß die Grundplatte (34) mit einem Hubantrieb versehen ist.

35. Vorrichtung nach Anspruch 34, dadurch gekennzeichnet, daß der Hubantrieb ein federunterstützter Hydraulikantrieb (13) ist.

36. Vorrichtung nach Anspruch 34 oder 35, dadurch gekennzeichnet, daß der Hubantrieb mit dem Antrieb des Unterwerkzeuges (8) synchronisiert ist.

37. Vorrichtung nach Anspruch 36, dadurch gekennzeichnet, daß die Öffnungsvorrichtung (33) und das Unterwerkzeug (8) denselben Antrieb aufweisen.

38. Vorrichtung nach einem der Ansprüche 32 bis 37, dadurch gekennzeichnet, daß die Hebel (36, 37) eine dem Verpackungsbehälter (1) zugewandte obere Begrenzung (17) des Unterwerkzeuges (8) überragen.

39. Vorrichtung nach Anspruch 38, dadurch gekennzeichnet, daß die Hebel (36, 37) die obere Begrenzung des Unterwerkzeuges (8) mindestens um eine von einer Tiefe des Verpackungsbehälters (1) abhängige Länge überragen.

40. Vorrichtung nach einem der Ansprüche 32 bis 39, dadurch gekennzeichnet, daß die Hebel (36, 37) jeweils ein zum Ergreifen der Transportstäbe (5) geeignetes verformtes freies Ende (38, 39) aufweisen.

41. Vorrichtung nach einem der Ansprüche 33 bis 40, dadurch gekennzeichnet, daß zur Steuerung der Hebel (36, 37) eine Führung (40, 41) vorgesehen ist.

42. Vorrichtung nach Anspruch 41, dadurch gekennzeichnet, daß die Führung (40, 41) in Abhängigkeit von einem jeweils zurückgelegten Hub der Öffnungsvorrichtung (33) mechanisch ausgebildet ist.

43. Verfahren zum Versiegeln von Verpackungsbehältern, deren Öffnung mit einer Folie verschlossen wird, die unter dem Einfluß von Hitze mit einem die Öffnung umgebenden Rand verbunden wird, dadurch gekennzeichnet, daß eine Siegelelektrode (18) auf eine zum Versiegeln geeignete Temperatur erhitzt und gegen ein Widerlager gedrückt wird, das zur Aufnahme einer zum Versiegeln geeigneten Druckkraft nachgiebig gelagert ist.

44. Verfahren nach Anspruch 43, dadurch gekennzeichnet, daß ein als Widerlager ausgebildetes Unterwerkzeug (8) in Richtung auf ein mit der Siegelelektrode (18) versehenes nachgiebig gelagertes Oberwerkzeug (7) angehoben und mit einem Siegeldruck gegen dieses gepreßt wird.

45. Verfahren nach Anspruch 43 oder 44, dadurch gekennzeichnet, daß ein Verpackungsbehälter (1) auf einer Transportvorrichtung (3) in Richtung auf eine Siegelstation (3) transportiert wird, oberhalb eines zu versiegelndes Verpackungsbehälters (1) eine Folie (19) zur Siegelstation (2) gefördert und ein den Verpackungsbehälter im Bereich seiner Öffnung (21) abdeckender Verschlußstreifen ausgestanzt und auf einen die Öffnung (21) umgegebenden Rand (4) aufgelegt wird, der Verpackungsbehälter (1) von der Transportvorrichtung (3) abgekoppelt und durch Anheben des Unterwerkzeuges (8) gegen die erhitzte Siegelelektrode (18) des Oberwerkzeuges (7) versiegelt wird.

46. Verfahren nach Anspruch 45, dadurch gekennzeichnet, daß die Folie (19) zwischen zwei gegensinnig rotierenden Walzen (27, 28) gefördert und zwischen diesen der Verschlußstreifen ausgestanzt wird.

47. Verfahren nach Anspruch 46, dadurchgekennzeichnet, daß der Verschlußstreifen von einer auf eine profilierte Walze (18) einwirkenden Glattwalze (27) entsprechend einem auf der profilierten Walze (28) ausgebildeten Profil (32) ausgestanzt und in Richtung auf die Öffnung (21) des Verpackungsbehälters (1) transportiert wird.

48. Verfahren nach einem der Ansprüche 44 bis 47, dadurch gekennzeichnet, daß zwei einander bezüglich des Verpackungsbehälters (1) gegenüberliegende Transportstäbe (5) voneinander entfernt und dadurch ein den Verpackungsbehälter (1) umgebender Rand (4) von den Transportstäben (5) abgehoben wird und dabei gleichzeitig der Verpackungsbehälter (1) in Richtung auf die Versiegelungselektrode (18) angehoben und die Folie (19) auf den Rand (4) aufgesiegelt wird.
